# EUROPEAN PATENT SPECIFICATION

(11) **EP 3 224 888 B1**
(45) Date of publication and mention of the grant of the patent: **30.03.2022**
(21) Application number: 15798120.0
(22) Date of filing: 23.11.2015
(51) Int. Cl.: H01M 8/0284, H01M 8/0286, H01M 8/0267, H01M 8/0228, H01M 8/0254, H01M 8/0276

(54) **FUEL CELL COMPONENT AND METHOD OF MANUFACTURING OF A FUEL CELL COMPONENT**
BRENNSTOFFZELLENKOMPONENTE UND VERFAHREN ZUR HERSTELLUNG EINER BRENNSTOFFZELLENKOMPONENTE
ÉLÉMENT PILE À COMBUSTIBLE ET PROCÉDÉ DE FABRICATION D'UN ÉLÉMENT PILE À COMBUSTIBLE

(30) Priority: 27.11.2014 NL 2013893
(43) Date of publication of application: 04.10.2017
(73) Proprietor: Borit N.V., 2440 Geel (BE)
(72) Inventor: OELBRANDT, Leo Albert Johan, B-9150 Kruibeke (BE)
(74) Representative: EP&C
(86) International application number: PCT/EP2015/077369
(87) International publication number: WO 2016/083307

(56) References cited:
- US-A1- 2002 094 464
- US-A1- 2004 062 976
- US-A1- 2009 220 849
- US-A1- 2011 203 721
- US-A1- 2014 295 321
- US-B1- 6 716 550
- US-B1- 6 861 171

## Description

### Fuel cell component and method of manufacturing of a fuel cell component

The invention pertains to a fuel cell component, a fuel cell comprising such a fuel cell component and a method of manufacturing a fuel cell component.

Document US6861171 relates to seals and particularly to static gaskets for various encapsulating covers and especially fuel cells. Document US2004 062976 relates to protonexchange membrane (PEM) fuel cells. More particularity, the document discloses a bipolar plate for a PEM fuel cell and to an improved process for laminating a gasket onto a surface of a bipolar plate. Fuel cells generally require hydrogen gas to flow over an anode and oxygen or air to flow over a cathode in order to produce electricity. In practical embodiments, this is realized by providing gutter-shaped channels for the hydrogen and oxygen or air to flow through. The hydrogen comes into contact with the anode via the open side of the gutter-shaped channel through which the hydrogen flows. This can be achieved by covering the open side of the gutter-shaped channel through which the hydrogen flows with the anode. In a different embodiment, the open side of this gutter-shaped channel is covered by a gas diffusion layer and the anode is arranged on the opposite side of the gas diffusion layer. The hydrogen then diffuses from the gutter-shaped channel through the gas diffusion layer and therewith comes into contact with the anode. Likewise, the oxygen or air hydrogen comes into contact with the cathode via the open side of the gutter-shaped channel through which the oxygen or air flows. This can be achieved by covering the open side of the gutter-shaped channel through which the oxygen or air flows with the cathode. In a different embodiment, the open side of this gutter-shaped channel is covered by a gas diffusion layer and the cathode is arranged on the opposite side of the gas diffusion layer. The oxygen or air then diffuses from the gutter-shaped channel through the gas diffusion layer and therewith comes into contact with the cathode.

The gutter-shaped channels can be provided in the bipolar plates of the fuel cell, where they are referred to as the flow field. In proton exchange membrane fuel cells, the anode and cathode form part of the membrane electrode assembly (MEA). Optionally, a gas diffusion layer is present between the bipolar plate and the adjacent membrane electrode assembly.

In order to make sure that the hydrogen, air and/or oxygen do not leak from the fuel cell, a seal is provided between the bipolar plate and the adjacent membrane electrode assembly. This seal is arranged adjacent to the flow field and often extends around the flow field and/or around supply openings or discharge openings in the bipolar plate. It is known to form this seal on the bipolar plate or on the membrane electrode assembly, for example by injection molding or screen printing, or to manufacture the seal separately as a gasket, and then arrange this gasket on the bipolar plate when building the fuel cell.

Bipolar plates can be made from graphite based materials or from metal. Metallic bipolar plates have advantages over graphite based plates, for example that they can be thinner and lighter, but in particular for thin plates, the sealing requires special attention.

In the fuel cell, the bipolar plates and other components are clamped tightly onto each other, which can lead to local deformations and high local peak loads in the bipolar plates and/or the membrane electrode assemblies and/or gas diffusion layers, which are all made of rather delicate materials. Walls of the channels of the flow field may be deformed due to bulging of seals or when they come into contact with other parts of the fuel cell.

The invention as defined by the independent claims aims to provide a fuel cell component with an improved seal. Advantageous embodiments of the invention are recited by the dependent claims.

According to the invention, a fuel cell is provided which comprises:
- a metal bipolar plate having a flow field channel pattern, which bipolar plate comprises a first metal sheet element comprising at least a part of said flow field channel pattern in the form of a channel pattern which extends over at least a part of the surface of said first metal sheet element, which first metal sheet element with said channel pattern has been produced by a process involving sheet metal deformation of a metal sheet having a substantially uniform thickness of less than 1 millimeter,
- a flow field seal, which flow field seal has been formed on the first sheet element, which flow field seal extends adjacent to an area of the surface of the first sheet element that has been provided with the channel pattern,

which flow field seal comprises a plate-side seal layer and a electrode-side seal layer, which plate-side seal layer is a screen printed silicone polymer seal layer that on one side is attached to the first sheet element, and which electrode-side seal layer is a screen printed silicone polymer seal layer that is arranged over the plate-side seal layer and is connected to the plate-side seal layer,
wherein the plate-side seal layer and the electrode-side seal layer have mutually different compressive deformation ratios, and the plate-side seal layer has a lower compressive deformation ratio than the electrode-side seal layer.

The fuel cell component in accordance with the invention comprises a bipolar plate with a flow field pattern and a flow field seal which has been formed onto said bipolar plate.

In accordance with this invention, the bipolar plate comprises at least one thin metal sheet element into which a channel pattern forming or forming part of the flow field pattern has been provided by a process involving sheet metal deformation. An initially flat metal sheet having a uniform thickness of less than 1 millimeter is subjected to a sheet deformation process, for example hydroforming, stamping or embossing, to be provided with a channel pattern of one or more open-topped, gutter-like channels. The material forming the wall of a channel protrudes out of the plane of the undeformed metal sheet, either to one side of the plane of the undeformed plate or to two mutually opposite sides of the plane of the undeformed plate. The material thickness of the first metal sheet element is generally less than 1 millimeter after deformation.

In practice, bipolar plates of this type are susceptible to sealing problems when they are arranged in a fuel cell, in particular because of the thinness of the material of the bipolar plate. In practice, the trend is towards increasingly thinner bipolar plates, which makes it increasingly harder to obtain a reliable seal.

Therefore, in accordance with the invention, a flow field seal is provided that has been formed on the first sheet element, which flow field seal extends adjacent to an area of the surface of the first sheet element that has been provided with the channel pattern. This flow field seal comprises a plate-side seal layer and a electrode-side seal layer. The plate-side seal layer is a screen printed silicone polymer seal layer that on one side is attached to the first sheet element. The electrode-side seal layer is a screen printed silicone polymer seal layer that is arranged on the plate-side seal layer and is connected to the plate-side seal layer. The plate-side seal layer and the electrode-side seal layer have mutually different compressive deformation ratios, and the plate-side seal layer has a lower compressive deformation ratio than the electrode-side seal layer.

The flow field seal as provided by the invention has several advantages.

The flow field seal has been formed onto the first metal sheet element, instead of that a separately manufactured seal or gasket is placed onto the first metal sheet element. By forming the flow field seal onto the first metal sheet element, the flow field seal right away follows any unevenness in the first metal sheet element, e.g. by filling up any depressions, while still an even, e.g. flat, top of the flow field seal can be obtained.

A suitable way of forming the flow field seal is by screen printing the first and electrode-side seal layers. Screen printing is a reliable way of accurately forming a seal from silicone polymer.

The plate-side seal layer is attached to the first metal sheet element. By screen printing the plate-side seal layer onto the first metal sheet element, some bonding between the plate-side seal layer and first metal sheet element is already obtained. This bonding can optionally be further improved by for example providing the first metal sheet element with a sheet primer or a coating that improves the adhesion between the plate-side seal layer and the first metal sheet element. Optionally, the sheet primer can be applied to the first metal sheet element by screen printing. The sheet primer is present between the first metal sheet element and the flow field seal, which flow field seal comprises a plate-side seal layer and an electrode-side seal layer. The sheet primer is present in addition to plate-side seal layer and an electrode-side seal layer of the flow field seal. Alternatively or in addition, one or more additives can be added to the silicone polymer of the plate-side seal layer, e.g. additives forming acid groups, which additives are aimed at improving the adhesion of the silicone polymer of the plate-side seal layer to the first metal sheet element.

It is advantageous that the plate-side seal layer is attached to the bipolar plate, because when the bipolar plate deforms e.g. during the assembly of the fuel cell, for example when a stack of bipolar plates and membrane electrode assemblies is clamped together, the flow field seal will deform along with the first metal sheet element. Furthermore, the attachment of the plate-side seal layer to the first metal sheet element reduces the risk of leakage via the contact surfaces of the first metal sheet element and the plate-side seal layer.

The electrode-side seal layer is screen printed on the plate-side seal layer. The plate-side seal layer and electrode-side seal layer are connected to each other, either directly or via one or more intermediate layers. An intermediate layer can for example be a further seal layer or an adhesion improvement layer. In case any intermediate layers are present, they are applied onto the plate-side seal layer after the plate-side seal layer has been screen printed onto the first metal sheet element but before the electrode-side seal layer is screen printed.

In the flow field seal according to the invention, the plate-side seal layer and the electrode-side seal layer have mutually different compressive deformation ratios, and the plate-side seal layer has a lower compressive deformation ratio than the electrode-side seal layer.

The compressive deformation ratio is generally speaking the ratio between the change in thickness of the respective seal layer when a certain, defined compressive pressure in one direction, perpendicular to the thickness of the seal layer is applied to it, relative to the thickness of the respective seal layer when no compressive pressure or other mechanical load is applied to it.

Of course, the compressive deformation ratio of the different seal layers is determined using the same compressive force for each layer.

A possible way of determining the compressive deformation ratio of the seal layers in accordance with the invention is the testing method described in DIN 53291-1982, called "Testing of sandwiches; Compression test perpendicular to the faces".

The compressive deformation ratio of the seal layers can for example be determined in the following way.

The seal layers will be screen printed on a base, but before that is done, the reduction in thickness of the base due to the pressure that will be exerted on the seal layer during the test is determined. Alternatively, a base is selected that is so rigid that any deformation of the base due to the applied test pressure is negligible.

Then, the plate-side seal layer of the flow field seal is screen printed onto the base. This plate-side seal layer has the same shape and dimensions as the plate-side seal layer in the actual product, and is made of the same material. Then, the height of the plate-side seal layer is determined. Then, a compressive pressure is applied to the plate-side seal layer, in one direction, perpendicular to the thickness of the plate-side seal layer. For example, the compressive pressure is applied by a test machine, e.g. a Zwick BZ010 with a 10 kN force cell, to a maximum of 30 bar. The machine is set to positioned controlled mode, at a compression speed of 0,005 mm/s, until a pressure of 30 bar is reached. Then, the thickness of the plate-side seal layer is determined while this 30 bar pressure is applied. This thickness under 20 bar pressure is corrected for the deformation of the base if necessary.

The compressive deformation ratio of the plate-side seal layer then is the ratio between the difference between the thickness of the plate-side seal layer before applying the compressive pressure and while applying the compressive pressure on the one hand and the thickness of the plate-side seal layer before applying the compressive pressure on the other hand.

Then, the electrode-side seal layer of the second seal is screen printed onto the base. This electrode-side seal layer has the same shape and dimensions as the electrode-side seal layer in the actual product, and is made of the same material. Then, the height of the electrode-side seal layer is determined. Then, a compressive pressure is applied to the electrode-side seal layer, in one direction, perpendicular to the thickness of the electrode-side seal layer. For example, the compressive pressure is applied by a test machine, e.g. a Zwick BZ010 with a 10 kN force cell, to a maximum of 30 bar. The machine is set to positioned controlled mode, at a compression speed of 0,005 mm/s, until a pressure of 30 bar is reached. Then, the thickness of the electrode-side seal layer is determined while this 30 bar pressure is applied. This thickness under 20 bar pressure is corrected for the deformation of the base if necessary.

The compressive deformation ratio of the electrode-side seal layer then is the ratio between the difference between the thickness of the electrode-side seal layer before applying the compressive pressure and while applying the compressive pressure on the one hand and the thickness of the electrode-side seal layer before applying the compressive pressure on the other hand.

If relevant for the actual situation in the product, any of the seal layers may be confined during the test in the same way as it is in the actual fuel cell component.

In the flow field seal according to the invention, the plate-side seal layer has a lower compressive deformation ratio than the electrode-side seal layer. This means that when the same compressive pressure is applied to the seal layers in a direction perpendicular to the thickness of said seal layer, the plate-side seal layer deforms less as a percentage of its initial thickness (i.e. before applying the pressure) than the electrode-side seal layer. So, it can be said that the electrode-side seal layer is "softer" than the plate-side seal layer.

This is in several ways advantageous for the sealing. As the plate-side seal layer will experience a smaller reduction in thickness when assembled, the increase in the width due to the decrease in thickness, also known as "bulging", will be less than that of the electrode-side seal layer.

According to the invention the plate-side seal layer is arranged on a lower area of the first metal sheet element that is situated between two elevated areas. In such an embodiment, excessive bulging of the plate-side seal layer could cause undesired deformation of the thin channel walls that extend between the lower area and an elevated area.

Furthermore, when a flow field sealing layer with a relatively low compressive deformation ratio is used, the deformation due to the shear stresses that are caused by a compressive force on the seal is less than when a flow field sealing layer with a higher compressive deformation ratio would be used. This results in less relative local movement between the first metal sheet element and parts of the plate-side seal layer, which is beneficial for the integrity of the seal and of the bond between the plate-side seal layer and the first metal sheet element.

The electrode-side seal layer, which is the seal layer at the top of the seal, has a higher compressive deformation ratio than the plate-side seal layer. The electrode-side seal layer engages the membrane electrode assembly in the assembled fuel cell. The membrane electrode assembly is quite fragile. The relatively soft electrode-side seal layer prevents that the membrane electrode assembly is damaged by stress concentrations at the edges of the seal when the fuel cell is being or has been assembled.

In a possible embodiment, the electrode-side seal layer is arranged directly on top of the plate-side seal layer. In this embodiment, no intermediate layer is present between the plate-side seal layer and the electrode-side seal layer.

In a possible embodiment, a single intermediate layer is present between the plate-side seal layer and the electrode-side seal layer. Optionally, this single intermediate layer is an adhesion improvement layer, e.g. a glue layer or a seal primer layer. Alternatively, this intermediate layer is a further seal layer, preferably a further screen printed silicone polymer seal layer.

In a possible embodiment, a plurality of intermediate layers is present between the plate-side seal layer and the electrode-side seal layer. Optionally, at least one intermediate layer is an adhesion improvement layer, e.g. a glue layer or a seal primer layer. Optionally, at least one intermediate layer is a further seal layer, preferably a further screen printed silicone polymer seal layer.

In embodiments in which at least one further seal layer is present as an intermediate layer, optionally the compressive deformation ratio of the further seal layer is higher than the compressive deformation ratio of the plate-side seal layer and lower than the compressive deformation ratio of the electrode-side seal layer.

In embodiments in which a plurality of further seal layers is present as an intermediate layers, optionally the compressive deformation ratio of the further seal layers is higher than the compressive deformation ratio of the plate-side seal layer and lower than the compressive deformation ratio of the electrode-side seal layer, and optionally the compressive deformation ratio of the further seal layers decreases from the electrode-side seal layer towards the plate-side seal layer.

A suitable material for the plate-side seal layer, the electrode-side seal layer and/or a further intermediate seal layer is for example the material described in WO2012/175526.

The difference in compressive deformation ratio between the respective seal layers can for example be achieved by using different types of silicone polymers, different curing conditions and/or by a different geometry.

Optionally, at least one seal layer has a cross sectional shape that is not square or rectangular, but for example triangular.

In a possible embodiment, at least one seal layer can be provided with a closed cell structure. Such a closed cell structure can for example be obtained by adding a foaming agent to the silicone polymer.

In a possible embodiment, the fuel cell element comprises two flow field seals. In this embodiment, the flow field seals are provided on two opposite sides of the bipolar plate, so the second flow field seal is present on the bipolar plate on the side facing away from the side of bipolar plate onto which the first flow field seal is present. Most preferably, one flow field seal is provided on the side of the bipolar plate that in an active fuel cell comes into contact with hydrogen, and an other flow field seal is provided on the side of the bipolar plate that in an active fuel cell comes into contact with air or oxygen. Preferably, the both flow field seals are flow field seals according to the invention.

In a possible embodiment, the bipolar plate of the fuel cell component according to the invention has only a single sheet metal element. In this embodiment, the channels of the flow field on one side of the bipolar plate are formed by the gutter-like channels of the channel pattern, and on the opposite side of the bipolar plate the channels of the flow field on one side of the bipolar plate are formed by the areas of the sheet metal element between the gutter-like channels.

Optionally, a second flow field seal is provided on the first sheet element on the side facing away from the side of first sheet element onto which the first flow field seal is present. Preferably, the second flow field seal is a flow field seal according to the invention.

In a possible embodiment, the bipolar plate comprises a first metal sheet element and a second metal sheet element. The second metal sheet element comprises at least a part of the flow field channel pattern in the form of a channel pattern which extends over at least a part of the surface of said second metal sheet element. Like the first metal sheet element, the second metal sheet element with the channel pattern has been produced by a process involving sheet metal deformation of a metal sheet having a substantially uniform thickness of less than 1 millimeter.

In this embodiment, the first sheet element and second sheet element are connected to each other with the channel pattern of the first sheet element and/or of the second sheet element providing a channel or multiple channels between the first sheet element and the second sheet element. The channel or channels between the first sheet element and the second sheet element can for example be used for cooling the bipolar plate, by making a cooling medium flow through said channel or channels.

The flow field seal is attached to the first sheet element on the side facing away from the second sheet element.

Optionally, a second flow field seal is provided on the second sheet element on the side facing away from the first sheet element. Preferably, the second flow field seal is a flow field seal according to the invention.

In a possible embodiment, the material thickness of the first metal sheet element and/or of the second metal sheet element is between 0.3 and 0.01 millimeter, optionally between 0.1 and 0.01 millimeter. This allows to obtain relatively light weight fuel cells. In this embodiment, the first metal sheet element and/or of the second metal sheet element, respectively, is made from a metal sheet having a substantially uniform thickness of between 0.3 and 0.01 millimeter, optionally between 0.1 and 0.01 millimeter, respectively.

For example, the material thickness of the first metal sheet element and/or of the second metal sheet element is 0.2 millimeter, 0.1 millimeter, 0.075 millimeter, 0.050 millimeter or 0.125 millimeter. In this embodiment, the first metal sheet element and/or of the second metal sheet element, respectively, is made from a metal sheet having a substantially uniform thickness of 0.2 millimeter, 0.1 millimeter, 0.075 millimeter, 0.050 millimeter or 0.125 millimeter, respectively.

According to the invention, the first sheet element and/or the second sheet element comprises at least two elevated areas with a lower area between said elevated areas.

According to the invention, the flow field seal is arranged on said lower area between said elevated areas.

According to the invention, the height of the plate-side seal layer is equal to or larger than the height of at least one elevated area adjacent to the flow field seal relative to the lower area onto which the flow field seal is arranged. In practical embodiments, the elevated area will generally be part of the channel pattern. In that case, the plate-side seal layer acts as a stop that prevents deformation of the wall of the channel due to the clamping forces that hold the stack of the bipolar plates and membrane electrode assemblies together in an assembled fuel cell.

In a possible embodiment the first sheet element and/or second sheet element comprises at least two lower areas with an elevated area between said lower areas. In this embodiment, the flow field seal is arranged on said elevated area between said lower areas.

The invention further pertains to a fuel cell which comprises:
- a first fuel cell component, which is a fuel cell component according to the invention,
- a membrane electrode assembly,
- a second fuel cell component, which is a fuel cell component according to the invention,
wherein the membrane electrode assembly is arranged between first fuel cell component and the second fuel cell component,
and wherein the flow field seal of the first fuel cell component engages the membrane electrode assembly on a first side and wherein the flow field seal of the second fuel cell component engages the membrane electrode assembly on a second side opposite to the first side.

Optionally, such a fuel cell further comprises a first gas diffusion layer and a second gas diffusion layer, the first gas diffusion layer is present between the first fuel cell component and the membrane electrode assembly and the second gas diffusion layer is present between the second fuel cell component and the membrane electrode assembly.

The invention further pertains to a method for manufacturing a fuel cell component, which component comprises the following steps:
- providing a first metal sheet having a substantially uniform thickness of less than 1 millimeter with a channel pattern by a sheet metal deformation process of said first metal sheet, thereby forming a first metal sheet element,
- forming a flow field seal onto the first sheet element, which flow field seal extends adjacent to an area of the surface of the first sheet element that has been provided with the channel pattern, which comprises the following steps:
- screen printing a silicone polymer plate-side seal layer onto the first sheet element, which plate-side seal layer is attached to the first sheet element,
- after screen printing the plate-side seal layer onto the first sheet element, screen printing a silicone polymer electrode-side seal layer over the plate-side seal layer, which electrode-side seal layer is connected to the plate-side seal layer,
wherein the plate-side seal layer and the electrode-side seal layer have mutually different compressive deformation ratios, and the plate-side seal layer has a lower compressive deformation ratio than the electrode-side seal layer.

It is not necessary that the electrode-side seal layer is screen printed directly onto the plate-side seal layer. It is possible that one or more intermediate layers are present between the plate-side seal layer and the electrode-side seal layer. Optionally, at least one intermediate layer is an adhesion improvement layer, e.g. a glue layer or a seal primer layer. Optionally, at least one intermediate layer is a further seal layer, preferably a further screen printed silicone polymer seal layer.

Optionally, the first metal sheet has a uniform thickness of between 0.3 millimeter and 0.01 millimeter, optionally between 0.1 millimeter and 0.01 millimeter. For example, the first metal sheet has a uniform thickness of 0.2 millimeter, 0.1 millimeter, 0.075 millimeter, 0.050 millimeter or 0.125 millimeter.

In a possible embodiment, the method according to the invention further comprises the steps of:
- providing a second metal sheet having a substantially uniform thickness of less than 1 millimeter with a channel pattern by a sheet metal deformation process of said second metal sheet, thereby forming a second metal sheet element,
- connecting the first sheet element and the second sheet element to each other, with the channel pattern of the first sheet element and/or of the second sheet element providing a channel between the first sheet element and the second sheet element,
wherein the flow field seal is formed on the side of the first sheet element that faces away from the second sheet element.

In a possible embodiment, the material thickness of the first metal sheet element and/or of the second metal sheet element is between 0.3 and 0.01 millimeter, optionally between 0.1 and 0.01 millimeter. This allows to obtain relatively light weight fuel cells. In this embodiment, the first metal sheet element and/or of the second metal sheet element, respectively, is made from a metal sheet having a substantially uniform thickness of 0.3 and 0.01 millimeter, optionally between 0.1 and 0.01 millimeter, respectively.

Optionally, the first metal sheet and/or the second metal sheet has a uniform thickness of between 0.3 millimeter and 0.01 millimeter, optionally between 0.1 millimeter and 0.01 millimeter. For example, the first metal sheet and/or the second metal sheet has a uniform thickness of 0.2 millimeter, 0.1 millimeter, 0.075 millimeter, 0.050 millimeter or 0.125 millimeter.

In a possible embodiment, the method according to the invention further comprises the step of forming second flow field seal on the side of the bipolar plate the side facing away from the side of bipolar plate onto which the first flow field seal is present. The step of forming the second flow field seal comprises:
- screen printing a silicone polymer plate-side seal layer onto the bipolar plate, which plate-side seal layer is attached to the first sheet element,
- after screen printing the plate-side seal layer onto the bipolar plate, screen printing a silicone polymer electrode-side seal layer over the plate-side seal layer, which electrode-side seal layer is connected to the plate-side seal layer,
wherein the plate-side seal layer and the electrode-side seal layer have mutually different compressive deformation ratios, and the plate-side seal layer has a lower compressive deformation ratio than the electrode-side seal layer.

In a possible embodiment of the method according to the invention, the plate-side seal layer is cured after applying it onto the first sheet element by screen printing but before applying the electrode-side seal layer over the plate-side seal layer.

In a possible embodiment of the method according to the invention, the sheet metal deformation process is hydroforming. This allows accurate manufacturing of the metal sheet elements and allows rather deep and complexly shaped channels to be formed in metal sheets. Furthermore, using hydroforming as the sheet metal deformation process results in metal sheet elements that are still relatively flat and hardly warped. This facilitates the screen printing process and contributes to a good quality of the flow field seal. When warped bipolar plates are clamped together to form a stack of a fuel cell, these bipolar plates will be forced to take a flat form. This results in deformation of the warped bipolar plate, which deformation may harm the quality of the seal, e.g due to the seal not being able to follow this deformation of the bipolar plate. This problem is reduced or even solved when hydroformed metal sheet elements are used.

Optionally, a hydroforming press as described in German Patent DE 103 14 637 or in German Patent DE10 2004 059829 is used.

In a possible embodiment of the method according to the invention, the step of providing a first metal sheet having a substantially uniform thickness of less than 1 millimeter with a channel pattern by a sheet metal deformation process of said first metal sheet, thereby forming a first metal sheet element and/or the step of providing a second metal sheet having a substantially uniform thickness of less than 1 millimeter with a channel pattern by a sheet metal deformation process of said second metal sheet, thereby forming a second metal sheet element comprises the following substeps:
- providing a coil of metal sheet material, which metal sheet material has a substantially uniform thickness of less than 1 millimeter,
- unwinding sheet material from the coil and supplying unwound sheet material to a sheet metal forming device, optionally a hydroforming press,
- providing said unwound metal sheet material with a channel pattern by a sheet metal deformation process,
- severing the unwound metal sheet material with the channel pattern from the remainder of the coil.

Preferably, in this method, the sheet metal deformation process is hydroforming.

Optionally, the metal sheet material has a thickness between 0.3 and 0.01 millimeter, optionally between 0.1 and 0.01 millimeter. For example, the metal sheet material has a uniform thickness of 0.2 millimeter, 0.1 millimeter, 0.075 millimeter, 0.050 millimeter or 0.125 millimeter.

In a possible embodiment of the method according to the invention, the first metal sheet element and/or the second metal sheet element is provided with a sheet primer and/or coating prior to forming the flow field seal. The sheet primer and/or coating may be applied before or after providing the channel pattern in the first and/or second metal sheet by the sheet metal deformation process.

The invention will be described in more detail below under reference to the figures, in which in a non-limiting manner exemplary embodiments of the invention will be shown.

In the figures:
Fig. 1: schematically illustrates an example of a fuel cell component according to the invention,
Fig. 2: schematically illustrates an example of a part of a bipolar plate with a flow field channel pattern, and a flow field seal, in cross section,
Fig. 3: schematically illustrates an example of a fuel cell,
Fig. 4: schematically illustrates a part of a first embodiment of a fuel cell component which is not according to the invention,
Fig. 5: schematically illustrates a part of a second embodiment of a fuel cell component according to the invention,
Fig. 6: schematically illustrates a part of a third embodiment of a fuel cell component according to the invention,

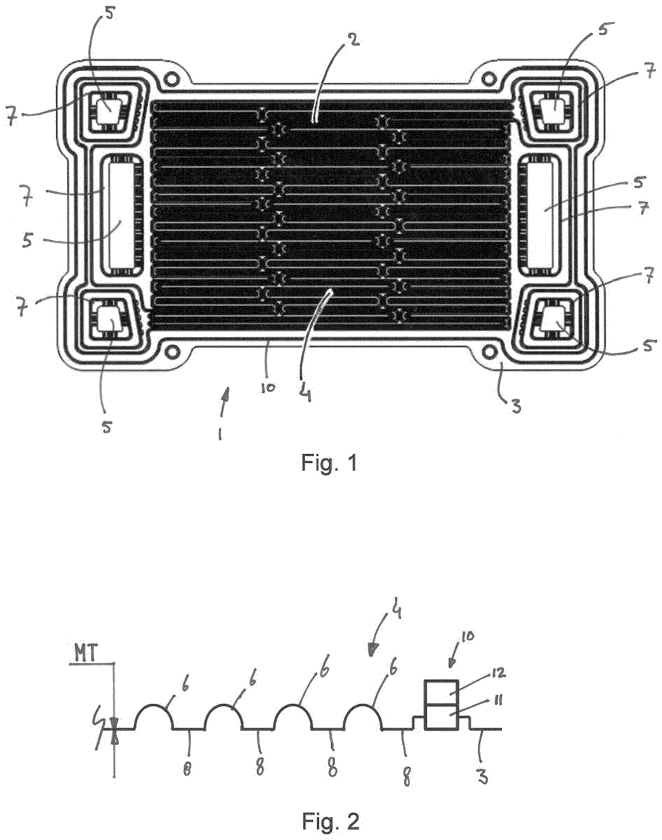

Fig. 1 schematically illustrates an example of a fuel cell component according to the invention.

The fuel cell component of fig. 1 comprises a bipolar plate 1 with a flow field channel pattern 2. The bipolar plate 1 comprises a first metal sheet element 3 having a channel pattern 4 which extends over at least a part of the surface of this first metal sheet element 3. This channel pattern 4 forms at least a part of the flow field channel pattern 2.

The fuel cell component of fig. 1 further comprises a flow field seal 10, which flow field seal 10 has been formed on the first sheet element 3. The flow field seal 10 extends adjacent to an area of the surface of the first sheet element 3 that has been provided with the channel pattern 4.

In the example of fig. 1, the flow field seal 10 extends around the flow field channel pattern 2. Further seals 7 extend around openings 5 for fluid supply or fluid discharge. These further seals 7 optionally have the same design as the flow field seal 10.

The first metal sheet element 3 with the channel pattern 4 has been produced by a process involving sheet metal deformation of a metal sheet having a substantially uniform thickness of less than 1 millimeter. This results in a first sheet element having a material thickness of generally less than 1 millimeter.

The material thickness of the first sheet element 3 is the thickness of the material of the first sheet element 3. The height over which the channels of the channel pattern 4 protrude does not contribute to the material thickness.

Fig. 2 schematically illustrates an example of a part of a bipolar plate with a flow field channel pattern, and a flow field seal 10, in cross section.

In this example, the bipolar plate comprises just a single metal sheet element 3, which has a channel pattern 4. In the example of fig. 2, the walls 6 of the channels of the channel pattern 4 protrude relative to flat parts 8 of the metal sheet element 3 that are present adjacent to the channel walls 6. Here, the flat parts 8 are undeformed parts of the metal sheet from which the metal sheet element 3 was made using sheet metal deformation. The plane through the flat parts 8 is the plane of the undeformed metal sheet.

In the example of fig. 2, the material forming the wall 6 of a channel protrudes out of the plane of the undeformed metal sheet, to one side of the plane of the undeformed plate. Alternatively, the channel walls 6 may protrude to two mutually opposite sides of the plane of the undeformed plate. In a possible embodiment, no plat parts 8 are present between the walls 6 of the channels.

In fig. 2, MT indicates the material thickness of the metal sheet element 3. So, the height of the channel wall 6 relative to the flat parts 8 does not contribute to the material thickness. The material thickness of the first metal sheet element is generally less than 1 millimeter after deformation. Optionally, the material thickness is between 0.3 and 0.01 millimeter, optionally between 0.1 and 0.01 millimeter. For example, the material thickness is 0.2 millimeter, 0.1 millimeter, 0.075 millimeter, 0.050 millimeter or 0.125 millimeter.

As can be seen in fig. 2, the flow field seal 10 comprises a plate-side seal layer 11 and a electrode-side seal layer 12. The plate-side seal layer 11 is a screen printed silicone polymer seal layer that on one side is attached to the first sheet element 3. The electrode-side seal layer 12 is a screen printed silicone polymer seal layer that is arranged over the plate-side seal layer 11 and is connected to the plate-side seal layer, either directly or indirectly via one or more intermediate layers.

The plate-side seal layer 11 and the electrode-side seal layer 12 have mutually different compressive deformation ratios. The plate-side seal layer 11 has a lower compressive deformation ratio than the electrode-side seal layer 12.

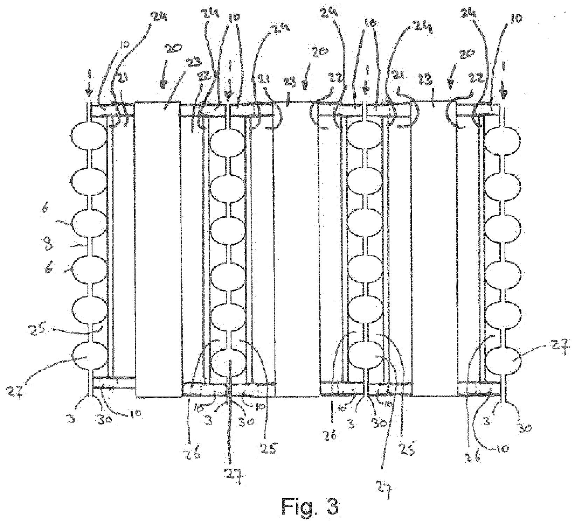

Fig. 3: schematically illustrates an example of a fuel cell.

The fuel cell of fig. 3 comprises a plurality of membrane-electrode assemblies 20, each comprising two electrodes (an anode 21 and a cathode 22; optionally catalyst embedded electrodes) with a permeable but electrical insulating membrane 23 in between. Between the membrane-electrode assemblies 20, bipolar plates 1 are arranged. Gas diffusion layers 24 are optionally present between each membrane electrode assembly 20 and its adjacent bipolar plates 1.

In the example of fig. 3, the bipolar plates 1 each comprise a first metal sheet element 3 and a second metal sheet element 30. Both metal sheet elements 3,30 are provided with a channel pattern that forms at least part of the flow field channel pattern. In fig. 3, the first metal sheet element 3 and the second metal sheet element 30 are shown to be arranged somewhat spaced apart from each other, but this was done for clarity reasons only. In practice, the first metal sheet element 3 and the second metal sheet element 30 are connected to each other, for example at the flat parts 8 between the channel walls 6.

Due to the channel pattern that is provided in both the first metal sheet element 3 and the second metal sheet element 30, one or more channels 27 are present between the first metal sheet element 3 and the second metal sheet element 30. Through these channels 27, for example a cooling medium can flow in order to provide cooling to the bipolar plate 1.

Due to the channel pattern in the first metal sheet element 3, there are spaces between the cathode 22 (or the gas diffusion layer 24 on the cathode side of the membrane electrode assembly 20) and the first sheet element 3. These spaces form one or more channels 26, through which air or oxygen flows which contacts the cathode when the fuel cell is in operation.

Due to the channel pattern in the second metal sheet element 30, there are spaces between the anode 21 (or the gas diffusion layer 24 on the anode side of the membrane electrode assembly 20) and the second sheet element 30. These spaces form one or more channels 25, through which hydrogen flows which contacts the anode when the fuel cell is in operation.

Leakage of hydrogen and of the oxygen or air that is used in the fuel cell is prevented by the flow field seals 10.

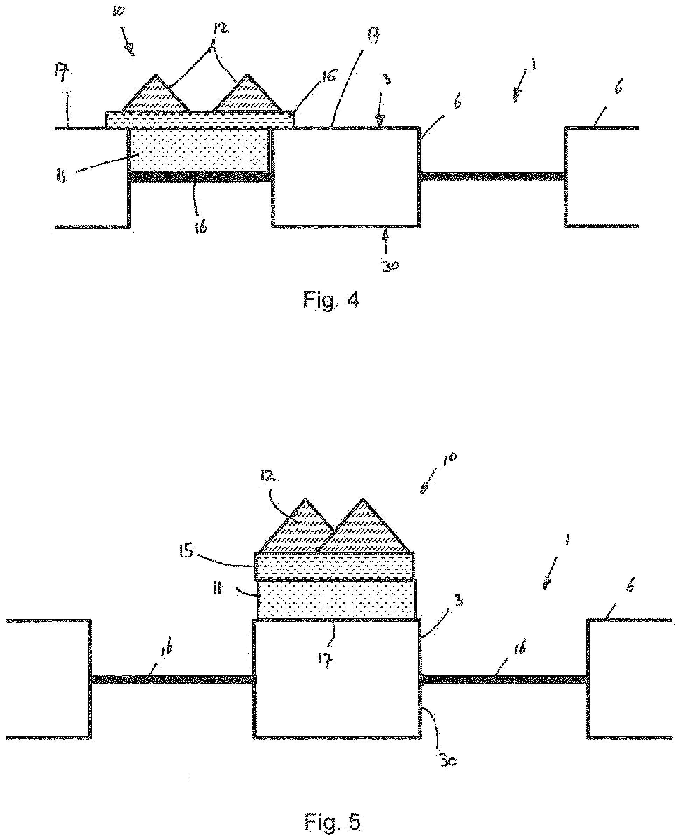

Fig. 4 schematically illustrates a part of a first embodiment of a fuel cell component according to the invention.

In the embodiment of fig. 4, the bipolar plate 1 comprises a first metal sheet element 3 and a second metal sheet element 30. The first metal sheet element 3 and the second metal sheet element 30 are connected to each other between the channel walls 6 of the channel pattern.

The fuel cell component of fig. 4 further comprises flow field seal 10. In this embodiment, the flow field seal 10 comprises a plate-side seal layer 11, an electrode-side seal layer 12 and an intermediate layer 15.

In this embodiment, the flow field seal is arranged on a lower area 16 between two elevated areas 17 of the first metal sheet element 3. The elevated areas 17 may be part of the flow field channel pattern, but this is not necessary.

In the embodiment of fig. 4, the height of the plate-side seal layer 10 is about equal to the height of the elevated areas 17 adjacent to the flow field seal 10 relative to the lower area 16 onto which the flow field seal 10 is arranged. As the intermediate layer 15 and the electrode-side seal layer 12 have a compressive deformation ratio of less than 100%, there will always be a distance between the bipolar plate 1 and an adjacent membrane-electrode assembly or other fuel cell component in an assembled fuel cell. This reduces the risk of indentation or other undesired deformation of the bipolar plates, in particular near the elevated areas 17. Here, the plate-side seal layer 11 more or less acts as a stop that prevents deformation of the wall of the channel or other elevated area 17 adjacent to the flow field seal 10 due to the clamping forces that hold the stack of the bipolar plates and membrane electrode assemblies together in an assembled fuel cell.

In the embodiment of fig. 4, the electrode-side seal layer 12 does not have a square or rectangular cross-sectional shape. In this embodiment, electrode-sided seal layer 12 comprises two ridges that are somewhat spaced apart. The cross-sectional shape of each ridge is in this example triangular Alternatively, the electrode-side seal layer 12 may for example have a cross sectional shape in the form of square or rectangle, or the shape of a single triangle, two partly overlapping triangles, more than two triangles, or any other suitable shape.

The electrode-side seal layer 12 is in accordance with the invention made by screen printing. The triangular shapes in the cross-sectional shape are obtained by repeatedly screen printing thin layers on top of each other, each a bit narrower than the previous one, so a stepped triangular shape is obtained. Due to the viscosity of silicone polymers, the screen printed layers will show some flow at the edges, thereby creating a smoother triangular shape than a purely stepped triangle.

In accordance with the invention, the compressive deformation ratio of the plate-side seal layer 11 is less than the compressive deformation ratio of the electrode-side seal layer 12. The different shapes of the plate-side seal layer 11 and the electrode-side seal layer 12 already contribute to this. The difference can even be enhanced by using different silicone polymer materials for the different seal layers 11,12 and/or using different curing conditions.

In the embodiment of fig. 4, an intermediate layer 15 is present between the plate-side seal layer 11 and the electrode-side seal layer 12. This intermediate layer 15 can be an adhesion improvement layer, e.g. a glue layer or a seal primer layer, or a further seal layer, preferably a further screen printed silicone polymer seal layer.

In the situation where the intermediate layer 15 is a further seal layer, optionally the compressive deformation ratio of the further seal layer is higher than the compressive deformation ratio of the plate-side seal layer and lower than the compressive deformation ratio of the electrode-side seal layer.

Fig. 5 schematically illustrates a part of a second embodiment of a fuel cell component which is not according to the invention.

In the embodiment of fig. 5, the bipolar plate 1 comprises a first metal sheet element 3 and a second metal sheet element 30. The first metal sheet element 3 and the second metal sheet element 30 are connected to each other between the channel walls 6 of the channel pattern.

The fuel cell component of fig. 5 further comprises flow field seal 10. In this embodiment, the flow field seal 10 comprises a plate-side seal layer 11, an electrode-side seal layer 12 and an intermediate layer 15.

In this embodiment, the flow field seal is arranged on an elevated area 17 between two lower areas 16 of the first metal sheet element 3. The elevated area 17 may be part of the flow field channel pattern, but this is not necessary.

In the embodiment of fig. 5, the electrode-side seal layer 12 does not have a square or rectangular cross-sectional shape. Its cross-sectional shape comprises two triangles that in the example partly overlap each other. So, the electrode-side seal layer 12 comprises two adjacent ridges, but the valley between those ridges does not extend all the way to the intermediate layer 15. Alternatively, the electrode-side seal layer 12 may for example have a square or rectangular cross-sectional shape, or a cross section in the shape of a single triangle, two triangles spaced apart from each other, more than two triangles, or any other suitable shape.

The electrode-side seal layer 12 is made by screen printing. The triangular shapes in the cross-sectional shape are obtained by repeatedly screen printing thin layers on top of each other, each a bit narrower than the previous one, so a stepped triangular shape is obtained. Due to the viscosity of silicone polymers, the screen printed layers will show some flow at the edges, thereby creating a smoother triangular shape than a purely stepped triangle.

The compressive deformation ratio of the plate-side seal layer 11 is less than the compressive deformation ratio of the electrode-side seal layer 12. The different shapes of the plate-side seal layer 11 and the electrode-side seal layer 12 already contribute to this. The difference can even be enhanced by using different silicone polymer materials for the different seal layers 11,12 and/or using different curing conditions.

In the embodiment of fig. 5, an intermediate layer 15 is present between the plate-side seal layer 11 and the electrode-side seal layer 12. This intermediate layer 15 can be an adhesion improvement layer, e.g. a glue layer or a seal primer layer, or a further seal layer, preferably a further screen printed silicone polymer seal layer.

In the situation where the intermediate layer 15 is a further seal layer, optionally the compressive deformation ratio of the further seal layer is higher than the compressive deformation ratio of the plate-side seal layer and lower than the compressive deformation ratio of the electrode-side seal layer.

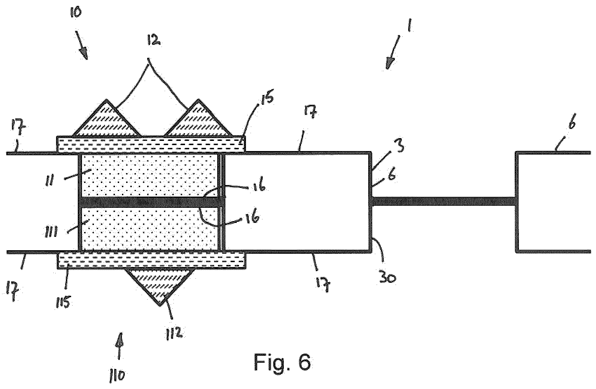

Fig. 6 schematically illustrates a part of a third embodiment of a fuel cell component according to the invention.

In the embodiment of fig. 6, the bipolar plate 1 comprises a first metal sheet element 3 and a second metal sheet element 30. The first metal sheet element 3 and the second metal sheet element 30 are connected to each other between the channel walls 6 of the channel pattern.

The fuel cell component of fig. 6 further comprises two flow field seals 10, 110. In this embodiment, both flow field seals 10, 110 comprise a plate-side seal layer 11, 111, an electrode-side seal layer 12, 112 and an intermediate layer 15, 115.

In this embodiment, both flow field seals 10, 110 are arranged on a lower area 16 between two elevated areas 17 of the first metal sheet element 3. The elevated areas 17 may be part of the flow field channel pattern, but this is not necessary.

In the embodiment of fig. 6, the electrode-side seal layer 12 on the side of the first metal sheet element 3 has a cross-sectional shape that comprises two triangles that are somewhat spaced apart. The electrode-side seal layer 112 on the side of the second metal sheet element 30 has a cross-sectional shape that comprises a single triangle that is arranged in line with the space between the triangles of the electrode-side seal layer 12 on the first metal sheet element 3. When two bipolar plates 1 of this design are arranged on top of each other, the first metal sheet element 3 of one bipolar plate 1 facing the second metal sheet element 30 of the other bipolar plate 1, the electrode-side seal layer 112 of one bipolar plate 11 is located between the two ridges with the triangular cross section of the electrode-side seal layer 12 of the other bipolar plate 1.

This embodiment is in particular suitable for use in fuel cells wherein the bipolar plates are clamped directly onto each other or wherein just a flexible part of the membrane electrode assembly (e.g. just the membrane) is clamped between the bipolar plates.

In accordance with the invention, the compressive deformation ratio of the plate-side seal layer 11 is less than the compressive deformation ratio of the electrode-side seal layer 12, and the compressive deformation ratio of the plate-side seal layer 111 is less than the compressive deformation ratio of the electrode-side seal layer 112. The different shapes of the plate-side seal layers 11,111 and the electrode-side seal layers 12, 112, respectively already contribute to this. The difference can even be enhanced by using different silicone polymer materials for the different seal layers 11,12 and/or using different curing conditions.

In the embodiment of fig. 6, an intermediate layer 15 is present between the plate-side seal layer 11 and the electrode-side seal layer 12. This intermediate layer 15 can be an adhesion improvement layer, e.g. a glue layer or a seal primer layer, or a further seal layer, preferably a further screen printed silicone polymer seal layer.

In the situation where the intermediate layer 15 is a further seal layer, optionally the compressive deformation ratio of the further seal layer is higher than the compressive deformation ratio of the plate-side seal layer and lower than the compressive deformation ratio of the electrode-side seal layer.

The embodiments of fig. 4, fig. 5 and fig. 6 can for example be manufactured as explained below.

First, a coil of metal sheet material is provided. The metal sheet material on this coil has a substantially uniform thickness of less than 1 millimeter. The thickness may even be between 0.3 millimeter and 0.01 millimeter, or between 0.1 millimeter and 0.01 millimeter. The metal sheet material on the coil may be coated or provided with a sheet primer.

Then, sheet material is unwound from the coil. This unwound sheet material is then supplied to a sheet metal forming device. This sheet metal forming device is a hydroforming press, for example an Hydrogate press as developed by Borit NV.

The hydroforming press then provides the sheet material with the desired channel pattern. After that, the unwound metal sheet material with the channel pattern is then severed from the remainder of the coil. The severed metal sheet material with the channel pattern now is the first metal sheet element 3.

More sheet material is unwound from the coil. This unwound sheet material is then supplied to the hydroforming press. The hydroforming press then provides the sheet material with the desired channel pattern. After that, the unwound metal sheet material with the channel pattern is severed from the remainder of the coil. The severed metal sheet material with the channel pattern now is the second metal sheet element 30.

Optionally, the first metal sheet element 3 and/or the second metal sheet element 30 are provided with a sheet primer or coating prior to or after the sheet metal deformation process.

The first sheet element 3 and the second sheet element 30 are connected to each other, with the channel pattern of the first sheet element 3 and/or of the second sheet element 30 providing a channel between the first sheet element 3 and the second sheet element 30. This can be done before or after the flow field seal 11 is, or the flow field seals 10, 110 are applied to the respective metal sheet elements 3, 30. The connection between the first sheet element 3 and the second sheet element 30 can for example be obtained by welding, gluing, brazing or soldering.

A flow field seal 10 is formed on the first metal sheet element 3. The flow field seal 10 extends adjacent to an area of the surface of the first sheet element 3 that has been provided with the channel pattern. It is formed by first screen printing a silicone polymer plate-side seal layer 11 onto the first sheet element 3. The plate-side seal layer 11 is attached to the first sheet element 3.

In embodiments like the ones shown in fig. 4, fig. 5 and fig. 6, an intermediate layer 15 is present. This intermediate layer is formed on the plate-side seal layer 11 after this plate-side seal layer 11 is formed, for example screen printed, on the first metal sheet element 3.

Then, a silicone polymer electrode-side seal layer 12 is screen printed on top of the intermediate layer 15 (and therewith also over the plate-side seal layer 11). The electrode-side seal layer 12 is connected to the plate-side seal layer 11 via the intermediate layer.

In accordance with the invention, the plate-side seal layer 11 and the electrode-side seal layer 12 have mutually different compressive deformation ratios, and the plate-side seal layer 11 has a lower compressive deformation ratio than the electrode-side seal layer 12.

For embodiments in which a flow field seal is provided both on the first metal sheet element and on the second metal sheet element, a further step is taken. In this step, a flow field seal 110 is formed on the second metal sheet element 30. The flow field seal 110 extends adjacent to an area of the surface of the second sheet element 30 that has been provided with the channel pattern. It is formed by second screen printing a silicone polymer plate-side seal layer 111 onto the second sheet element 30. The plate-side seal layer 111 is attached to the second sheet element 30.

In embodiments like the one shown in fig. 6, an intermediate layer 115 is present. This intermediate layer is formed on the plate-side seal layer 111 after this plate-side seal layer 111 is formed, for example screen printed, on the second metal sheet element 30.

Then, a silicone polymer electrode-side seal layer 112 is screen printed on top of the intermediate layer 115 (and therewith also over the plate-side seal layer 111). The electrode-side seal layer 112 is connected to the plate-side seal layer 111 via the intermediate layer.

In accordance with the invention, the plate-side seal layer 111 and the electrode-side seal layer 112 have mutually different compressive deformation ratios, and the plate-side seal layer 111 has a lower compressive deformation ratio than the electrode-side seal layer 112.

When the first metal sheet element 3 and the second metal sheet element 30 are connected to each other to form a bipolar plate together after the flow field seal 10 or flow field seals 10, 110 are formed on the respective sheet elements 3, 30, the first metal sheet element 3 and the second metal sheet element 30 are connected to each other in such a way that the flow field seal 10 or flow field seals 10, 110 are present on the outer surface of the bipolar plate 1.

Optionally, curing of the plate-side seal layer 11, 111 and/or of an intermediate layer 15, 115 takes place before curing of the electrode-side seal layer 12,112. Alternatively, all seal layers 11,12,15; 111,112,115ofa single sheet element 3, 30 are cured at the same time.

## Claims

1. Fuel cell component, which comprises:
- a metal bipolar plate (1) having a flow field channel pattern (2), which bipolar plate (1) comprises a first metal sheet element (3) comprising at least a part of said flow field channel pattern (2) in the form of a channel pattern (4) which extends over at least a part of the surface of said first metal sheet element, which first metal sheet element (3) with said channel pattern (4) has been produced by a process involving sheet metal deformation of a metal sheet having a substantially uniform thickness of less than 1 millimeter,
- a flow field seal (10), which flow field seal (10) has been formed on the first sheet element (3), which flow field seal (10) extends adjacent to an area of the surface of the first sheet element (3) that has been provided with the channel pattern (4),
which flow field seal (10) comprises a plate-side seal layer (11) and a electrode-side seal layer (12), which plate-side seal layer (11) is a screen printed silicone polymer seal layer that on one side is attached to the first sheet element (3), and which electrode-side seal layer (12) is a screen printed silicone polymer seal layer that is arranged over the plate-side seal layer (11) and is connected to the plate-side seal layer,
wherein the plate-side seal layer (11) and the electrode-side seal layer (12) have mutually different compressive deformation ratios, and the plate-side seal layer (11) has a lower compressive deformation ratio than the electrode-side seal layer (12),
wherein the first sheet element (3) comprises at least two elevated areas (17) with a lower area (16) between said elevated areas (17), wherein the flow field seal (10) is arranged on said lower area (16) between said elevated areas (17), and wherein the height of the plate-side seal layer (11) is equal to or larger than the height of at least one elevated area (17) adjacent to the flow field seal (10) relative to the lower area (16) onto which the flow field seal (10) is arranged, wherein optionally the first metal sheet element (3) is provided with a primer that is present in addition to the plate-side seal layer (11) and the electrode-side seal layer (12) of the flow field seal (10).

2. Fuel cell component according to claim 1,
wherein the bipolar plate (1) further comprises a second metal sheet element (30) comprising at least a part of the flow field channel pattern in the form of a channel pattern which extends over at least a part of the surface of said second metal sheet element, which second metal sheet element (30) with said channel pattern has been produced by a process involving sheet metal deformation of a metal sheet having a substantially uniform thickness of less than 1 millimeter,
wherein the first sheet element (3) and second sheet element (30) are connected to each other with the channel pattern of the first sheet element (3) and/or of the second sheet element (30) providing a channel between the first sheet element (3) and the second sheet element (30),
and wherein the flow field seal (10) is attached to the first sheet element (3) on the side facing away from the second sheet element (30).

3. Fuel cell component according to any of the preceding claims,
wherein the fuel cell component further comprises a second flow field seal (110), which second flow field seal (110) is present on the bipolar plate (1) on the side facing away from the side of bipolar plate (1) onto which the first flow field seal (10) is present.

4. Fuel cell component according to claim 2,
wherein the second sheet element (30) comprises at least two elevated areas with a lower area between said elevated areas, wherein the flow field seal (110) is arranged on said lower area between said elevated areas, and wherein the height of the plate-side seal layer is equal to or larger than the height of at least one elevated area adjacent to the flow field seal (110) relative to the lower area onto which the flow field seal (110) is arranged,
and/or
wherein the second sheet element (30) comprises at least two lower areas with an elevated area between said lower areas, wherein the flow field seal (110) is arranged on said elevated area between said lower areas.

5. Fuel cell component according to any of the preceding claims,
wherein the plate-side seal layer (11) has a cross sectional shape that is different from the cross sectional shape of the electrode-side seal layer (12).

6. Fuel cell component according to any of the preceding claims,
wherein the plate-side seal layer (11) is made of a different silicone polymer material than the electrode-side seal layer (12).

7. Fuel cell component according to any of the preceding claims,
wherein at least one seal layer has a closed cell structure.

8. Fuel cell component according to any of the preceding claims,
wherein a sheet primer and/or coating is present between the metal of the metal sheet element and the flow field seal, and/or wherein the plate-side seal layer (11) comprises an adhesion improvement additive.

9. Fuel cell component according to any of the preceding claims,
wherein the material thickness of the first metal sheet element (3) and/or of the second metal sheet element (30) is between 0.3 and 0.01 millimeter, optionally between 0.1 and 0.01 millimeter.

10. Fuel cell comprising,
- a first fuel cell component, which is a fuel cell component according to claim 1,
- a membrane electrode assembly (20),
- a second fuel cell component, which is a fuel cell component according to claim 1,
wherein the membrane electrode assembly (20) is arranged between first fuel cell component and the second fuel cell component,
and wherein the flow field seal (10) of the first fuel cell component engages the membrane electrode assembly (20) on a first side and wherein the flow field seal (110) of the second fuel cell component engages the membrane electrode assembly (20) on a second side opposite to the first side,
wherein optionally the fuel cell further comprises a first gas diffusion layer (24) and a second gas diffusion layer (24), wherein the first gas diffusion layer (24) is arranged between the first fuel cell component and the membrane electrode assembly (20) and the second gas diffusion layer (24) is arranged between the second fuel cell component and the membrane electrode assembly (20).

11. Method for manufacturing a fuel cell component, which component comprises the following steps:
- providing a first metal sheet having a substantially uniform thickness of less than 1 millimeter with a channel pattern (4) by a sheet metal deformation process of said first metal sheet, thereby forming a first metal sheet element (3),
- forming a flow field seal (10) onto the first sheet element (3), which flow field seal (10) extends adjacent to an area of the surface of the first sheet element (3) that has been provided with the channel pattern (4), which comprises the following steps:
- screen printing a silicone polymer plate-side seal layer (11) onto the first sheet element (3), which plate-side seal layer (11) is attached to the first sheet element (3),
- after screen printing the plate-side seal layer (11) on the first sheet element (3), screen printing a silicone polymer electrode-side seal layer (12) over the plate-side seal layer (11), which electrode-side seal layer (12) is connected to the plate-side seal layer (11),
wherein the plate-side seal layer (11) and the electrode-side seal layer (12) have mutually different compressive deformation ratios, and the plate-side seal layer (11) has a lower compressive deformation ratio than the electrode-side seal layer (12).
wherein the first sheet element (3) is formed to comprise at least two elevated areas (17) with a lower area (16) between said elevated areas (17), wherein the flow field seal (10) is arranged on said lower area (16) between said elevated areas (17), and wherein the height of the plate-side seal layer (11) is equal to or larger than the height of at least one elevated area adjacent to the flow field seal (10) relative to the lower area (16) onto which the flow field seal (10) is arranged, wherein optionally the first metal sheet element (3) is provided with a primer that is present in addition to the plate-side seal layer (11) and the electrode-side seal layer (12) of the flow field seal (10).

12. Method according to claim 11,
which method further comprises the steps of:
- providing a second metal sheet having a substantially uniform thickness of less than 1 millimeter with a channel pattern by a sheet metal deformation process of said second metal sheet, thereby forming a second metal sheet element (30),
- connecting the first sheet element (3) and the second sheet element (30) to each other, with the channel pattern of the first sheet element and/or of the second sheet element providing a channel between the first sheet element and the second sheet element, wherein the flow field seal is formed on the side of the first sheet element that faces away from the second sheet element.

13. Method according to any of the claims 11-12,
wherein the plate-side seal layer (11) is cured after applying it onto the first sheet element (3) by screen printing but before applying the electrode-side seal layer (12) onto the plate-side seal layer (11),
and/or
wherein the sheet metal deformation process is hydroforming.

14. Method according to any of the claims 11-13,
wherein the step of providing a first metal sheet having a substantially uniform thickness of less than 1 millimeter with a channel pattern by a sheet metal deformation process of said first metal sheet, thereby forming a first metal sheet element (3) and/or the step of providing a second metal sheet having a substantially uniform thickness of less than 1 millimeter with a channel pattern by a sheet metal deformation process of said second metal sheet, thereby forming a second metal sheet element (30) comprises the following substeps:
- providing a coil of metal sheet material, which metal sheet material has a substantially uniform thickness of less than 1 millimeter,
- unwinding sheet material from the coil and supplying unwound sheet material to a sheet metal forming device, optionally a hydroforming press,
- providing said unwound metal sheet material with a channel pattern by a sheet metal deformation process,
- severing the unwound metal sheet material with the channel pattern from the remainder of the coil.

15. Method according to any of the claims 11-14,
wherein the first metal sheet element (3) and/or the second metal sheet element (30) is provided with a sheet primer or coating prior to forming the flow field seal.

## Patentansprüche

1. Brennstoffzellenkomponente, die umfasst:
- eine bipolare Metallplatte (1) mit einem Strömungsfeld-Kanalmuster (2), wobei die bipolare Platte (1) ein erstes Metallblechelement (3) umfasst, das mindestens einen Teil des Strömungsfeld-Kanalmusters (2) in der Form eines Kanalmusters (4) umfasst, das sich über mindestens einen Teil der Oberfläche des ersten Metallblechelements erstreckt, wobei das erste Metallblechelement (3) mit dem Kanalmuster (4) durch einen Prozess hergestellt wurde, der eine Metallblechverformung eines Metallblechs mit einer im Wesentlichen gleichmäßigen Dicke von weniger als 1 Millimeter beinhaltet,
- eine Strömungsfelddichtung (10), wobei die Strömungsfelddichtung (10) auf dem ersten Blechelement (3) ausgebildet ist, wobei sich die Strömungsfelddichtung (10) angrenzend an einen Bereich der Oberfläche des ersten Blechelements (3) erstreckt, der mit dem Kanalmuster (4) versehen worden ist,
wobei die Strömungsfelddichtung (10) eine plattenseitige Dichtungsschicht (11) und eine elektrodenseitige Dichtungsschicht (12) umfasst, wobei die plattenseitige Dichtungsschicht (11) eine siebgedruckte Dichtungsschicht aus Silikonpolymer ist, die auf einer Seite an dem ersten Blechelement (3) angebracht ist, und wobei die elektrodenseitige Dichtungsschicht (12) eine siebgedruckte Dichtungsschicht aus Silikonpolymer ist, die über der plattenseitigen Dichtungsschicht (11) angeordnet und mit der plattenseitigen Dichtungsschicht verbunden ist,
wobei die plattenseitige Dichtungsschicht (11) und die elektrodenseitige Dichtungsschicht (12) zueinander unterschiedliche Druckverformungsverhältnisse aufweisen, und die plattenseitige Dichtungsschicht (11) ein geringeres Druckverformungsverhältnis als die elektrodenseitige Dichtungsschicht (12) aufweist,
wobei das erste Blechelement (3) mindestens zwei erhöhte Bereiche (17) mit einem unteren Bereich (16) zwischen den erhöhten Bereichen (17) umfasst, wobei die Strömungsfelddichtung (10) auf dem unteren Bereich (16) zwischen den erhöhten Bereichen (17) angeordnet ist, und wobei die Höhe der plattenseitigen Dichtungsschicht (11) gleich oder größer als die Höhe von mindestens einem erhöhten Bereich (17) ist, der an die Strömungsfelddichtung (10) angrenzt, relativ zu dem unteren Bereich (16), auf dem die Strömungsfelddichtung (10) angeordnet ist, wobei optional das erste Metallblechelement (3) mit einer Grundierung versehen ist, die zusätzlich zu der plattenseitigen Dichtungsschicht (11) und der elektrodenseitigen Dichtungsschicht (12) der Strömungsfelddichtung (10) vorhanden ist.

2. Brennstoffzellenkomponente nach Anspruch 1,
wobei die bipolare Platte (1) darüber hinaus ein zweites Metallblechelement (30) umfasst, das zumindest einen Teil des Strömungsfeld-Kanalmusters in der Form eines Kanalmusters umfasst, das sich über zumindest einen Teil der Oberfläche des zweiten Metallblechelements erstreckt, wobei das zweite Metallblechelement (30) mit dem Kanalmuster durch einen Prozess hergestellt wurde, der eine Metallblechverformung eines Metallblechs mit einer im Wesentlichen gleichmäßigen Dicke von weniger als 1 Millimeter beinhaltet,
wobei das erste Blechelement (3) und das zweite Blechelement (30) miteinander verbunden sind, wobei das Kanalmuster des ersten Blechelements (3) und/oder des zweiten Blechelements (30) einen Kanal zwischen dem ersten Blechelement (3) und dem zweiten Blechelement (30) bildet,
und wobei die Strömungsfelddichtung (10) auf der dem zweiten Blechelement (30) abgewandten Seite an dem ersten Blechelement (3) angebracht ist.

3. Brennstoffzellenkomponente nach einem der vorhergehenden Ansprüche, wobei die Brennstoffzellenkomponente darüber hinaus eine zweite Strömungsfelddichtung (110) umfasst, wobei die zweite Strömungsfelddichtung (110) auf der bipolaren Platte (1) auf der Seite vorhanden ist, die von der Seite der bipolaren Platte (1) abgewandt ist, auf der die erste Strömungsfelddichtung (10) vorhanden ist.

4. Brennstoffzellenkomponente nach Anspruch 2,
wobei das zweite Blechelement (30) mindestens zwei erhöhte Bereiche mit einem unteren Bereich zwischen den erhöhten Bereichen umfasst, wobei die Strömungsfelddichtung (110) auf dem unteren Bereich zwischen den erhöhten Bereichen angeordnet ist, und wobei die Höhe der plattenseitigen Dichtungsschicht gleich oder größer ist als die Höhe von mindestens einem erhöhten Bereich ist, der an die Strömungsfelddichtung (110) angrenzt, relativ zu dem unteren Bereich, auf dem die Strömungsfelddichtung (110) angeordnet ist, und/oder
wobei das zweite Blechelement (30) mindestens zwei untere Bereiche mit einem erhöhten Bereich zwischen den unteren Bereichen umfasst, wobei die Strömungsfelddichtung (110) auf dem erhöhten Bereich zwischen den unteren Bereichen angeordnet ist.

5. Brennstoffzellenkomponente nach einem der vorhergehenden Ansprüche, wobei die plattenseitige Dichtungsschicht (11) eine Querschnittsform aufweist, die sich von der Querschnittsform der elektrodenseitigen Dichtungsschicht (12) unterscheidet.

6. Brennstoffzellenkomponente nach einem der vorhergehenden Ansprüche, wobei die plattenseitige Dichtungsschicht (11) aus einem anderen Silikonpolymermaterial besteht als die elektrodenseitige Dichtungsschicht (12).

7. Brennstoffzellenkomponente nach einem der vorhergehenden Ansprüche, wobei mindestens eine Dichtungsschicht eine geschlossene Zellstruktur aufweist.

8. Brennstoffzellenkomponente nach einem der vorhergehenden Ansprüche, wobei zwischen dem Metall des Metallblechelements und der Strömungsfelddichtung eine Blechgrundierung und/oder eine Beschichtung vorhanden ist, und/oder wobei die plattenseitige Dichtungsschicht (11) einen haftungsverbessernden Zusatz umfasst.

9. Brennstoffzellenkomponente nach einem der vorhergehenden Ansprüche, wobei die Materialdicke des ersten Metallblechelements (3) und/oder des zweiten Metallblechelements (30) zwischen 0,3 und 0,01 Millimeter, optional zwischen 0,1 und 0,01 Millimeter, beträgt.

10. Brennstoffzelle umfassend,
- eine erste Brennstoffzellenkomponente, die eine Brennstoffzellenkomponente nach Anspruch 1 ist,
- eine Membran-Elektroden-Anordnung (20),
- eine zweite Brennstoffzellenkomponente, die eine Brennstoffzellenkomponente nach Anspruch 1 ist,
wobei die Membranelektrodenanordnung (20) zwischen der ersten Brennstoffzellenkomponente und der zweiten Brennstoffzellenkomponente angeordnet ist,
und wobei sich die Strömungsfelddichtung (10) der ersten Brennstoffzellenkomponente auf einer ersten Seite mit der Membranelektrodenanordnung (20) in Eingriff befindet, und wobei sich die Strömungsfelddichtung (110) der zweiten Brennstoffzellenkomponente auf einer zweiten, der ersten Seite gegenüberliegenden Seite mit der Membranelektrodenanordnung (20) in Eingriff befindet,
wobei optional die Brennstoffzelle darüber hinaus eine erste Gasdiffusionsschicht (24) und eine zweite Gasdiffusionsschicht (24) umfasst, wobei die erste Gasdiffusionsschicht (24) zwischen der ersten Brennstoffzellenkomponente und der Membranelektrodenanordnung (20) und die zweite Gasdiffusionsschicht (24) zwischen der zweiten Brennstoffzellenkomponente und der Membranelektrodenanordnung (20) angeordnet ist.

11. Verfahren zur Herstellung einer Brennstoffzellenkomponente, das die folgenden Schritte umfasst:
- Versehen eines ersten Metallblechs mit einer im Wesentlichen gleichmäßigen Dicke von weniger als 1 Millimeter mit einem Kanalmuster (4) durch einen Metallblechverformungsprozess des ersten Metallblechs, wodurch ein erstes Metallblechelement (3) gebildet wird,
- Ausbilden einer Strömungsfelddichtung (10) auf dem ersten Blechelement (3), wobei sich die Strömungsfelddichtung (10) angrenzend an einen Bereich der Oberfläche des ersten Blechelements (3) erstreckt, der mit dem Kanalmuster (4) versehen worden ist, was die folgenden Schritte umfasst:
- Siebdrucken einer plattenseitigen Dichtungsschicht (11) aus Silikonpolymer auf das erste Blechelement (3), wobei die plattenseitige Dichtungsschicht (11) an dem ersten Blechelement (3) angebracht wird,
- nach dem Siebdrucken der plattenseitigen Dichtungsschicht (11) auf das erste Blechelement (3), Siebdrucken einer elektrodenseitigen Dichtungsschicht (12) aus Silikonpolymer über die plattenseitige Dichtungsschicht (11), wobei die elektrodenseitige Dichtungsschicht (12) mit der plattenseitigen Dichtungsschicht (11) verbunden wird,
wobei die plattenseitige Dichtungsschicht (11) und die elektrodenseitige Dichtungsschicht (12) zueinander unterschiedliche Druckverformungsverhältnisse aufweisen, und die plattenseitige Dichtungsschicht (11) ein geringeres Druckverformungsverhältnis als die elektrodenseitige Dichtungsschicht (12) aufweist,
wobei das erste Blechelement (3) so ausgebildet wird, dass es mindestens zwei erhöhte Bereiche (17) mit einem unteren Bereich (16) zwischen den erhöhten Bereichen (17) umfasst, wobei die Strömungsfelddichtung (10) auf dem unteren Bereich (16) zwischen den erhöhten Bereichen (17) angeordnet wird, und wobei die Höhe der plattenseitigen Dichtungsschicht (11) gleich oder größer als die Höhe von mindestens einem erhöhten Bereich ist, der an die Strömungsfelddichtung (10) angrenzt, relativ zu dem unteren Bereich (16), auf dem die Strömungsfelddichtung (10) angeordnet wird, wobei optional das erste Metallblechelement (3) mit einer Grundierung versehen wird, die zusätzlich zu der plattenseitigen Dichtungsschicht (11) und der elektrodenseitigen Dichtungsschicht (12) der Strömungsfelddichtung (10) vorhanden ist.

12. Verfahren nach Anspruch 11, wobei das Verfahren darüber hinaus die Schritte umfasst:
- Bereitstellen eines zweiten Metallblechs mit einer im Wesentlichen gleichmäßigen Dicke von weniger als 1 Millimeter mit einem Kanalmuster durch einen Blechverformungsprozess des zweiten Metallblechs, wodurch ein zweites Metallblechelement (30) ausgebildet wird,
- Verbinden des ersten Blechelementes (3) und des zweiten Blechelementes (30) miteinander, wobei das Kanalmuster des ersten Blechelementes und/oder des zweiten Blechelementes einen Kanal zwischen dem ersten Blechelement und dem zweiten Blechelement bildet,
wobei die Strömungsfelddichtung auf der Seite des ersten Blechelementes gebildet wird, die von dem zweiten Blechelement abgewandt ist.

13. Verfahren nach einem der Ansprüche 11-12, wobei die plattenseitige Dichtungsschicht (11) nach dem Aufbringen auf das erste Blechelement (3) durch Siebdruck, aber vor dem Aufbringen der elektrodenseitigen Dichtungsschicht (12) auf die plattenseitige Dichtungsschicht (11) gehärtet wird,
und/oder
wobei der Blechverformungsprozess ein Hydroforming ist.

14. Verfahren nach einem der Ansprüche 11-13,
wobei der Schritt des Bereitstellens eines ersten Metallblechs mit einer im Wesentlichen gleichmäßigen Dicke von weniger als 1 Millimeter mit einem Kanalmuster durch einen Blechverformungsprozess des ersten Metallblechs, wodurch ein erstes Blechelement (3) gebildet wird, und/oder der Schritt des Bereitstellens eines zweiten Metallblechs mit einer im Wesentlichen gleichmäßigen Dicke von weniger als 1 Millimeter mit einem Kanalmuster durch einen Blechverformungsprozess des zweiten Metallblechs, wodurch ein zweites Metallblechelement (30) gebildet wird, die folgenden Teilschritte umfasst:
- Bereitstellen eines Coils aus Metallblechmaterial, wobei das Metallblechmaterial eine im Wesentlichen gleichmäßige Dicke von weniger als 1 Millimeter aufweist,
- Abwickeln des Blechmaterials von dem Coil und Zuführen des abgewickelten Blechmaterials zu einer Einrichtung zur Metallblechverformung, optional einer Hydroforming-Presse,
- Versehen des abgewickelten Metallblechmaterials mit einem Kanalmuster durch einen Metallblechverformungsprozess,
- Abtrennen des abgewickelten Metallblechmaterials mit dem Kanalmuster von dem Rest des Coils.

15. Verfahren nach einem der Ansprüche 11-14,
wobei das erste Metallblechelement (3) und/oder das zweite Blechelement (30) vor dem Ausbilden der Strömungsfelddichtung mit einer Blechgrundierung oder Beschichtung versehen wird.

## Revendications

1. Composant de pile à combustible, comprenant :
- une plaque métallique bipolaire (1) comportant un motif de canal de champ d'écoulement (2), laquelle plaque bipolaire (1) comprend un premier élément feuille métallique (3) comprenant au moins une partie dudit motif de canal de champ d'écoulement (2) sous la forme d'un motif de canal (4) qui s'étend sur au moins une partie de la surface dudit premier élément feuille métallique, lequel premier élément feuille métallique (3) doté dudit motif de canal (4) a été produit par un traitement faisant appel à une déformation de métal en feuille d'une feuille métallique ayant une épaisseur sensiblement uniforme inférieure à 1 millimètre,
- un joint d'étanchéité de champ d'écoulement (10), lequel joint d'étanchéité de champ d'écoulement (10) a été formé sur le premier élément feuille (3), lequel joint d'étanchéité de champ d'écoulement (10) s'étend adjacent à une zone de la surface du premier élément feuille (3) qui a fait l'objet d'une formation du motif de canal (4),
lequel joint d'étanchéité de champ d'écoulement (10) comprend une couche d'étanchéité côté plaque (11) et une couche d'étanchéité côté électrodes (12), laquelle couche d'étanchéité côté plaque (11) est une couche d'étanchéité de polymère à base de silicone sérigraphiée dont un côté est fixé au premier élément feuille (3), et laquelle couche d'étanchéité côté électrodes (12) est une couche d'étanchéité de polymère à base de silicone sérigraphiée qui est disposée sur la couche d'étanchéité côté plaque (11) et qui est liée à la couche d'étanchéité côté plaque,
dans lequel la couche d'étanchéité côté plaque (11) et la couche d'étanchéité côté électrodes (12) ont des taux de déformation par compression mutuellement différents, et la couche d'étanchéité côté plaque (11) a un taux de déformation par compression inférieur à celui de la couche d'étanchéité côté électrodes (12),
dans lequel le premier élément feuille (3) comprend au moins deux zones surélevées (17), une zone plus basse (16) se trouvant entre lesdites zones surélevées (17), dans lequel le joint d'étanchéité de champ d'écoulement (10) est disposé sur ladite zone plus basse (16) située entre lesdites zones surélevées (17), et dans lequel la hauteur de la couche d'étanchéité côté plaque (11) est égale ou supérieure à la hauteur d'au moins une zone surélevée (17) adjacente au joint d'étanchéité de champ d'écoulement (10) par rapport à la zone plus basse (16) sur laquelle est disposé le joint d'étanchéité de champ d'écoulement (10), dans lequel le premier élément feuille métallique (3) est éventuellement doté d'un primaire qui est présent en plus de la couche d'étanchéité côté plaque (11) et de la couche d'étanchéité côté électrodes (12) du joint d'étanchéité de champ d'écoulement (10).

2. Composant de pile à combustible selon la revendication 1,
dans lequel la plaque bipolaire (1) comprend en outre un second élément feuille métallique (30) comprenant au moins une partie du motif de canal de champ d'écoulement sous la forme d'un motif de canal qui s'étend sur au moins une partie de la surface dudit second élément feuille métallique, lequel second élément feuille métallique (30) doté dudit motif de canal a été produit par un traitement faisant appel à une déformation de métal en feuille d'une feuille métallique ayant une épaisseur sensiblement uniforme inférieure à 1 millimètre,
dans lequel le premier élément feuille (3) et le second élément feuille (30) sont liés l'un à l'autre, le motif de canal du premier élément feuille (3) et/ou du second élément feuille (30) fournissant un canal entre le premier élément feuille (3) et le second élément feuille (30),
et dans lequel le joint d'étanchéité de champ d'écoulement (10) est fixé au premier élément feuille (3) du côté orienté à l'opposé du second élément feuille (30).

3. Composant de pile à combustible selon l'une quelconque des revendications précédentes,
dans lequel le composant de pile à combustible comprend en outre un second joint d'étanchéité de champ d'écoulement (110), lequel second joint d'étanchéité de champ d'écoulement (110) est présent sur la plaque bipolaire (1) du côté orienté à l'opposé du côté de la plaque bipolaire (1) sur lequel est présent le premier joint d'étanchéité de champ d'écoulement (10).

4. Composant de pile à combustible selon la revendication 2,
dans lequel le second élément feuille (30) comprend au moins deux zones surélevées, une zone plus basse se trouvant entre lesdites zones surélevées, dans lequel le joint d'étanchéité de champ d'écoulement (110) est disposé sur ladite zone plus basse située entre lesdites zones surélevées, et dans lequel la hauteur de la couche d'étanchéité côté plaque est égale ou supérieure à la hauteur d'au moins une zone surélevée adjacente au joint d'étanchéité de champ d'écoulement (110) par rapport à la zone plus basse sur laquelle est disposé le joint d'étanchéité de champ d'écoulement (110),
et/ou
dans lequel le second élément feuille (30) comprend au moins deux zones plus basses, une zone surélevée se trouvant entre lesdites zones plus basses, dans lequel le joint d'étanchéité de champ d'écoulement (110) est disposé sur ladite zone surélevée située entre lesdites zones plus basses.

5. Composant de pile à combustible selon l'une quelconque des revendications précédentes,
dans lequel la couche d'étanchéité côté plaque (11) a une forme de section transversale qui est différente de la forme de section transversale de la couche d'étanchéité côté électrodes (12).

6. Composant de pile à combustible selon l'une quelconque des revendications précédentes,
dans lequel la couche d'étanchéité côté plaque (11) est constituée d'un matériau de polymère à base de silicone différent de celui de la couche d'étanchéité côté électrodes (12).

7. Composant de pile à combustible selon l'une quelconque des revendications précédentes,
dans lequel au moins une couche d'étanchéité a une structure à alvéoles fermés.

8. Composant de pile à combustible selon l'une quelconque des revendications précédentes,
dans lequel un primaire et/ou un revêtement de feuille est présent entre le métal de l'élément feuille métallique et le joint d'étanchéité de champ d'écoulement, et/ou dans lequel la couche d'étanchéité côté plaque (11) comprend un additif d'amélioration d'adhérence.

9. Composant de pile à combustible selon l'une quelconque des revendications précédentes,
dans lequel l'épaisseur de matériau du premier élément feuille métallique (3) et/ou du second élément feuille métallique (30) est comprise entre 0,3 et 0,01 millimètre, éventuellement entre 0,1 et 0,01 millimètre.

10. Pile à combustible comprenant,
- un premier composant de pile à combustible, qui est un composant de pile à combustible selon la revendication 1,
- un ensemble d'électrodes de membrane (20),
- un second composant de pile à combustible, qui est un composant de pile à combustible selon la revendication 1,
dans lequel l'ensemble d'électrodes de membrane (20) est disposé entre le premier composant de pile à combustible et le second composant de pile à combustible,
et dans lequel le joint d'étanchéité de champ d'écoulement (10) du premier composant de pile à combustible coopère avec l'ensemble d'électrodes de membrane (20) d'un premier côté et dans lequel le joint d'étanchéité de champ d'écoulement (110) du second composant de pile à combustible coopère avec l'ensemble d'électrodes de membrane (20) d'un second côté opposé au premier côté,
dans lequel la pile à combustible comprend en outre éventuellement une première couche de diffusion gazeuse (24) et une seconde couche de diffusion gazeuse (24), dans lequel la première couche de diffusion gazeuse (24) est disposée entre le premier composant de pile à combustible et l'ensemble d'électrodes de membrane (20) et la seconde couche de diffusion gazeuse (24) est disposée entre le second composant de pile à combustible et l'ensemble d'électrodes de membrane (20).

11. Procédé de fabrication d'un composant de pile à combustible, lequel procédé comprend les étapes suivantes consistant à :
- doter une première feuille métallique ayant une épaisseur sensiblement uniforme inférieure à 1 millimètre d'un motif de canal (4) par un traitement de déformation de métal en feuille de ladite première feuille métallique, formant ainsi un premier élément feuille métallique (3),
- former un joint d'étanchéité de champ d'écoulement (10) sur le premier élément feuille (3), lequel joint d'étanchéité de champ d'écoulement (10) s'étend adjacent à une zone de la surface du premier élément feuille (3) qui a été doté du motif de canal (4), ladite formation comprenant les étapes suivantes consistant à :
- sérigraphier une couche d'étanchéité côté plaque de polymère à base de silicone (11) sur le premier élément feuille (3), laquelle couche d'étanchéité côté plaque (11) est fixée au premier élément feuille (3),
- après la sérigraphie de la couche d'étanchéité côté plaque (11) sur le premier élément feuille (3), sérigraphier une couche d'étanchéité côté électrodes de polymère à base de silicone (12) sur la couche d'étanchéité côté plaque (11), laquelle couche d'étanchéité côté électrodes (12) est liée à la couche d'étanchéité côté plaque (11),
dans lequel la couche d'étanchéité côté plaque (11) et la couche d'étanchéité côté électrodes (12) ont des taux de déformation par compression mutuellement différents, et la couche d'étanchéité côté plaque (11) a un taux de déformation par compression inférieur à celui de la couche d'étanchéité côté électrodes (12),
dans lequel le premier élément feuille (3) est formé pour comprendre au moins deux zones surélevées (17), une zone plus basse (16) se trouvant entre lesdites zones surélevées (17), dans lequel le joint d'étanchéité de champ d'écoulement (10) est disposé sur ladite zone plus basse (16) située entre lesdites zones surélevées (17), et dans lequel la hauteur de la couche d'étanchéité côté plaque (11) est égale ou supérieure à la hauteur d'au moins une zone surélevée adjacente au joint d'étanchéité de champ d'écoulement (10) par rapport à la zone plus basse (16) sur laquelle est disposé le joint d'étanchéité de champ d'écoulement (10), dans lequel le premier élément feuille métallique (3) est éventuellement doté d'un primaire qui est présent en plus de la couche d'étanchéité côté plaque (11) et de la couche d'étanchéité côté électrodes (12) du joint d'étanchéité de champ d'écoulement (10).

12. Procédé selon la revendication 11,
lequel le procédé comprend en outre les étapes consistant à :
- doter une seconde feuille métallique ayant une épaisseur sensiblement uniforme inférieure à 1 millimètre d'un motif de canal par un traitement de déformation de métal en feuille de ladite seconde feuille métallique, formant ainsi un second élément feuille métallique (30),
- lier l'un à l'autre le premier élément feuille (3) et le second élément (30), le motif de canal du premier élément feuille et/ou du second élément feuille fournissant un canal entre le premier élément feuille et le second élément feuille,
dans lequel le joint d'étanchéité de champ d'écoulement est formé du côté du premier élément feuille qui est orienté à l'opposé du second élément feuille.

13. Procédé selon l'une ou l'autre des revendications 11 et 12,
dans lequel la couche d'étanchéité côté plaque (11) est durcie après son application sur le premier élément feuille (3) par une sérigraphie mais avant l'application de la couche d'étanchéité côté électrodes (12) sur la couche d'étanchéité côté plaque (11),
et/ou
dans lequel le traitement de déformation de métal en feuille est un traitement d'hydroformage.

14. Procédé selon l'une quelconque des revendications 11 à 13,
dans lequel l'étape consistant à doter une première feuille métallique ayant une épaisseur sensiblement uniforme inférieure à 1 millimètre d'un motif de canal par un traitement de déformation de métal en feuille de ladite première feuille métallique, formant ainsi un premier élément feuille métallique (3) et/ou l'étape consistant à doter une seconde feuille métallique ayant une épaisseur sensiblement uniforme inférieure à 1 millimètre d'un motif de canal par un traitement de déformation de métal en feuille de ladite seconde feuille métallique, formant ainsi un second élément feuille métallique (30), comprennent les sous-étapes suivantes consistant à :
- utiliser une bobine de matériau en feuille métallique, lequel le matériau en feuille métallique a une épaisseur sensiblement uniforme inférieure à 1 millimètre,
- dérouler le matériau en feuille de la bobine et amener le matériau en feuille déroulé vers un dispositif de formage de métal en feuille, éventuellement une presse d'hydroformage,
- doter ledit matériau en feuille métallique déroulé d'un motif de canal par un traitement de déformation de métal en feuille,
- séparer le matériau en feuille métallique déroulé doté du motif de canal du reste de la bobine.

15. Procédé selon l'une quelconque des revendications 11 à 14,
dans lequel le premier élément feuille métallique (3) et/ou le second élément feuille métallique (30) sont dotés d'un primaire ou d'un revêtement de feuille avant la formation du joint d'étanchéité de champ d'écoulement.
